(19) Europäisches Patentamt
European Patent Office
Office européen des brevets

(11) EP 0 986 766 B1

(12) FASCICULE DE BREVET EUROPEEN

(45) Date de publication et mention de la délivrance du brevet:
**02.04.2003 Bulletin 2003/14**

(21) Numéro de dépôt: **98929502.7**

(22) Date de dépôt: **05.06.1998**

(51) Int Cl.[7]: **G01T 1/167**

(86) Numéro de dépôt international:
**PCT/FR98/01151**

(87) Numéro de publication internationale:
**WO 98/055883 (10.12.1998 Gazette 1998/49)**

(54) **PROCEDE ET DISPOSITIF DE MESURE DE LA PROPORTION RELATIVE DE PLUTONIUM ET D'URANIUM DANS UN CORPS**

VERFAHREN UND VORRICHTUNG ZUR MESSUNG DES RELATIVEN ANTEILS VON URAN UND PLUTONIUM IN EINEM KÖRPER

METHOD AND DEVICE FOR MEASURING THE RELATIVE PROPORTION OF PLUTONIUM AND URANIUM IN A BODY

(84) Etats contractants désignés:
**BE CH DE GB LI SE**

(30) Priorité: **06.06.1997 FR 9707049**

(43) Date de publication de la demande:
**22.03.2000 Bulletin 2000/12**

(73) Titulaire: **COMMISSARIAT A L'ENERGIE ATOMIQUE**
**75015 Paris (FR)**

(72) Inventeur: **UMIASTOWSKI, Krzysztof**
**F-92190 Meudon (FR)**

(74) Mandataire: **Audier, Philippe André et al**
**Brevalex,**
**3, rue du Docteur Lancereaux**
**75008 Paris (FR)**

(56) Documents cités:
**FR-A- 2 547 061** **US-A- 4 620 100**

- **PATENT ABSTRACTS OF JAPAN vol. 018, no. 064 (P-1685), 2 février 1994 & JP 05 281158 A (MITSUBISHI ATOM POWER IND INC), 29 octobre 1993**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 986 766 B1

Printed by Jouve, 75001 PARIS (FR)

## Description

### Domaine technique

La présente invention concerne un procédé et un dispositif de mesure de la proportion relative de plutonium et d'uranium dans un corps.

Elle s'applique notamment à la différentiation du plutonium et de l'uranium contenus dans des colis de déchets radioactifs de grande taille. On entend par colis de grande taille des fûts de déchets bétonnés d'un diamètre de l'ordre du mètre ou plus, ou encore des conteneurs métalliques dont le volume peut atteindre plusieurs mètres cubes.

Il est en effet important, lors du stockage des déchets radioactifs, de connaître la nature et l'activité des radioémetteurs et en particulier des actinides, c'est-à-dire essentiellement de l'uranium et du plutonium.

### Etat de la technique antérieure

Les méthodes connues de détermination de la teneur en actinides d'un corps peuvent être classées en deux catégories. On distingue en effet les méthodes dites "destructives" des méthodes dites "non-destructives".

Lors de la mise en oeuvre des méthodes destructives, on prélève des échantillons en découpant le colis de matériau radioactif. Les échantillons prélevés sont ensuite analysés selon différentes techniques d'analyse parmi lesquelles on peut citer l'analyse chimique, la fluorescence X, la spectrométrie gamma ou l'activation neutronique, par exemple.

Les méthodes citées ci-dessus ne sont applicables qu'à des échantillons de faible volume, de quelques centimètres cubes à quelques litres. Elles sont donc inefficaces pour les mesures non destructives des colis de déchets radioactifs de grande taille.

Parmi les méthodes de détermination de la teneur en actinides dites non-destructives on distingue encore deux sous-catégories comprenant respectivement les méthodes non-destructives actives et les méthodes non-destructives passives.

Les méthodes non-destructives passives sont pour l'essentiel des méthodes de spectrométrie du rayonnement gamma émis par le corps, de comptage des neutrons émis lors de la fission spontanée des actinides contenus dans le corps, ou de calorimétrie.

La méthode de spectrométrie gamma du rayonnement émis n'est également applicable qu'aux échantillons homogènes et de petite taille. En effet, le comptage des neutrons émis lors de la fission spontanée des actinides d'échantillons plus importants, nécessite un appareillage sophistiqué, notamment pour s'affranchir de l'influence de neutrons provenant d'autres sources que la fission spontanée du corps à mesurer.

La méthode par calorimétrie permet d'évaluer la quantité totale de chaleur dégagée dans un corps radioactif, tel qu'un colis de déchets. Elle ne permet cependant pas de déterminer le type de désintégration qui est à l'origine de la chaleur.

On connaît enfin des méthodes non-destructives actives pour déterminer la teneur en actinides d'un corps. Ces méthodes sont dites actives parce qu'elles font appel à une source de rayonnement dit rayonnement interrogateur, externe au corps radioactif.

Parmi ces méthodes non destructives actives on distingue les mesures d'atténuation et les mesures de rayonnement émis.

Les mesures d'atténuation, tels que la gammamétrie ou la tomographie, mesurent l'atténuation d'un rayonnement extérieur traversant le colis radioactif à examiner. Les mesures de rayonnement émis, par contre, mesurent un rayonnement provenant du colis, lui-même, et provoqué par un rayonnement d'interrogation extérieur. Ces dernières mesures sont bien adaptées à l'examen de colis de déchets radioactifs de grande taille tels que des conteneurs en béton. Toutefois les méthodes non-destructives actives connues à l'heure actuelle ne permettent que de déterminer la quantité totale des actinides présents dans un colis, sans distinction de leur nature ou de leur composition. En particulier, elles ne permettent pas de différencier l'uranium du plutonium contenu dans le corps ou le colis radioactif examiné.

### Exposé de l'invention

La présente invention a pour but un procédé et un dispositif d'analyse ne présentant pas les limitations évoquées ci-dessus.

Elle a également pour but de proposer un procédé et un dispositif de mesure non-destructif, qui permettent de différencier l'uranium et le plutonium dans les colis de déchets radioactifs.

Pour atteindre ces buts, l'invention a plus précisément pour objet un procédé de mesure d'une proportion relative d'uranium et de plutonium dans un corps comportant les étapes suivantes :

a) irradiation du corps avec des photons dont l'énergie est suffisante pour provoquer une photofission d'éléments actinides,

b) comptage du nombre de neutrons retardés émis par unité de temps par des produits de fission induits dans ledit corps en réponse à l'irradiation,

c) établissement d'une fonction de décroissance temporelle du nombre de neutrons $n_e(t)$ émis, caractéristique de la composition en actinides dudit corps,

d) comparaison de la décroissance temporelle $n_e(t)$ caractéristique de la composition en actinides dudit corps, à des décroissances temporelles d'émission de neutrons retardés $n_u(t)$, $n_p(t)$ caractéristiques respectivement de l'uranium et du plutonium, pour établir la proportion relative de ces éléments dans le corps.

Ainsi, l'invention est pour l'essentiel basée sur l'activation photonique des actinides et sur la mesure de décroissance dans le temps du nombre de neutrons retardés.

Contrairement à l'activation neutronique qui souffre du faible parcours des neutrons dans des matériaux contenant de l'hydrogène tel que le béton ou le bitume, l'activation photonique, mise en oeuvre dans le procédé de l'invention, s'avère particulièrement adaptée à des colis de déchets de grandes dimensions. L'atténuation des photons, et notamment des photons d'énergie supérieure à 10 MeV est en effet faible.

Par ailleurs, la détection et le comptage de neutrons retardés de fission présente par rapport au comptage des neutrons prompts, l'avantage d'affranchir la mesure des réactions sur les noyaux de la matrice contenant les déchets radioactifs. Ces réactions viennent en effet s'ajouter au phénomène de photofission des noyaux actinides lors de l'activation photonique.

Les neutrons prompts sont émis pendant la fission, donc pendant la durée d'impulsion d'irradiation gamma. Les photons gamma, donnent aussi naissance aux neutrons, par la réaction neutron-gamma (n, $\gamma$) induite dans les différents éléments. Il n'est pas possible de faire la distinction entre les neutrons prompts de fission et les neutrons provenant des réactions neutron-gamma (n, $\gamma$).

La réaction photonucléaire des photons sur les noyaux actinides se déroule en deux étapes contenues dans un intervalle de temps de l'ordre de la picoseconde. Un photon est d'abord absorbé par le noyau. L'énergie absorbée provoque ensuite l'émission d'un photon ou d'une ou plusieurs particules. Lorsque l'énergie absorbée est supérieure au seuil de fission du noyau elle provoque par contre la fission de ce dernier.

La section efficace d'absorption d'un photon par le noyau atomique varie avec l'énergie du photon. Pour des photons dont l'énergie est inférieure à 6 MeV environ, on observe des résonances d'absorption très étroites, d'une largeur de 1eV environ. Par contre, pour des photons avec des énergies supérieures à 10 MeV, on observe une résonance d'absorption très large de plusieurs MeV. L'énergie de résonance d'absorption pour les photons est respectivement de 12,26 MeV et 12,24 MeV pour l'uranium 238 et le plutonium 239.

L'énergie des photons utilisés pour irradier le corps radioactif est choisie suffisante pour provoquer une photofission des éléments actinides. En particulier, elle est choisie supérieure au seuil de photofission qui se situe à 6 MeV environ. Elle est choisie de préférence supérieure à 10 MeV et voisine de l'énergie de résonance d'absorption.

Le corps radioactif est de préférence irradié pendant un temps d'irradiation suffisamment long pour accumuler un nombre suffisant de produits de fission et pour obtenir, par conséquent, une émission significative des neutrons retardés. Cependant, il n'est pas nécessaire de prolonger inutilement l'irradiation. Ainsi, le temps d'irradiation est choisi de préférence de l'ordre de la période moyenne des neutrons retardés, soit de l'ordre de 10 à 20 secondes, par exemple.

Après l'irradiation du corps radioactif à examiner, on effectue un comptage des neutrons, de préférence dans un mode multiéchelle. Le mode multiéchelle consiste à compter le nombre de neutrons détectés dans des intervalles successifs de temps de largeur unitaire dt. Le nombre de neutrons comptés dans chaque intervalle de temps est enregistré. Le temps total de mesure $\Delta T_m$ est tel que $\Delta T_m = Ndt$ où N est le nombre d'intervalles de temps.

Les étapes d'irradiation et de comptage peuvent être éventuellement répétées plusieurs fois.

Une étape suivante du procédé consiste à établir, en fonction du comptage, une décroissance temporelle des neutrons émis, caractéristique de la matière fissile. La décroissance temporelle peut être représentée sous la forme d'une courbe.

Cette étape peut comporter des calculs de correction des abondances relatives des groupes de neutrons retardés en fonction des conditions expérimentales et notamment des conditions d'irradiation. Les corrections sont sommairement décrites ci-après.

On rappelle que pour tous les éléments fissiles, les neutrons retardés sont classés en six groupes suivant leurs périodes de décroissance. Les valeurs de ces six périodes sont pratiquement constantes pour tous les éléments fissiles. Par contre, l'abondance relative de chaque groupe varie d'un isotope à l'autre. Dans le tableau 1 sont données à titre indicatif les périodes et les abondances relatives pour l'uranium 238 et le plutonium 239.

TABLEAU 1

| GROUPE | U 238 | | Pu 239 | |
|---|---|---|---|---|
| | $T_{1/2}$(s) | ABONDANCE | $T_{1/2}$(s) | ABONDANCE |
| 1 | 52, 38 | 0,013 | 53,75 | 0,038 |
| 2 | 21,58 | 0,137 | 22,29 | 0,280 |
| 3 | 5,00 | 0,162 | 5,19 | 0,216 |
| 4 | 1,93 | 0,388 | 2,09 | 0,328 |
| 5 | 0,493 | 0,225 | 0,549 | 0,103 |
| 6 | 0,172 | 0,075 | 0,216 | 0,035 |

L'évolution dans le temps du nombre de neutrons retardés émis par l'uranium 238 (pur) et le plutonium 239 (pur) est facilement calculable, à partir des données du tableau 1.

Ce nombre est calculé suivant la formule :

$$n(t) = \sum_{k=1}^{6} \beta_k e^{-\lambda_k t}$$

où $\beta_k$ est l'abondance relative du groupe k des neutrons et $\lambda_k$ est la constante de décroissance du groupe k.

Les abondances relatives des différents groupes des neutrons retardés correspondent aux valeurs à l'équilibre radioactif, c'est-à-dire des quantités accumulées après une irradiation très longue, d'une durée au moins égale à plusieurs fois la période la plus longue des groupes, soit au moins 5 à 10 minutes.

Or, selon un aspect particulier de l'invention on peut irradier le corps radioactif soit de façon continue soit par un train d'impulsions de photons.

A titre d'exemple, les photons peuvent être délivrés sous la forme d'un train de macro-impulsions de durée dt, avec une fréquence de répétition $f_r$. Après un nombre N d'impulsions, l'irradiation est arrêtée, et le comptage des neutrons retardés est effectué. Si la durée d'irradiation est courte, l'équilibre radioactif n'est pas atteint et les abondances relatives sont différentes de celles de l'équilibre. Ci-après, un exemple de calcul de corrections est exposé à titre d'exemple.

Le nombre total de fissions $n_f$ induites dans l'échantillon irradié, par une macro-impulsion, est égal à :

$$n_f = \Phi \Sigma_f dt \qquad (1)$$

où $\Phi$ est le flux de photons, $\Sigma_f$ est la section efficace de photofission, et dt la durée de macro-impulsion.

Sur ce nombre, une fraction $\nu_d$ de neutrons retardés est émise. Le nombre $n_{k,0}$ de neutrons retardés du groupe k (k=1...6) est égal à :

$$n_{k,0}=n_f \nu_d \beta_k \qquad (2),$$

où $\beta_k$ est l'abondance relative du groupe k.

Le nombre de précurseurs (éléments radioactifs pères de l'émetteur des neutrons retardés), créés pendant une macro-impulsion i, qui restent à la fin d'une séquence de N impulsions, est :

$$n_{k,i} = n_{k,0} e^{-\lambda_k (Ni) t_r} \qquad (3)$$

$\lambda_k$ étant la constante radioactive du groupe k, et $t_r$ étant la période de répétition des macro-impulsions.

Le nombre total de précurseurs du groupe k, à la fin d'irradiation est :

$$n_k = \sum_{i=1}^{N} n_{k,i} = n_{k,0} \sum_{i=1}^{N} e^{-\lambda_k (N-i) t_r} \qquad (4)$$

L'expression (2) normalisée à 1 neutron retardé ($n_f \nu_d$=1) donne :

$$n_{k,0}=\beta_k \qquad (5)$$

La somme dans l'expression (4) est réduite de manière suivante :

$$S_k = \sum_i \exp[-\lambda_k (N-i) t_r] = e^{N\alpha_k} e^{\alpha_k} \sum_i \exp[\alpha_k (i-1)] \qquad (6)$$

$\alpha_k=\lambda_k t_r$, où $S_k$ est le facteur de correction du nombre des neutrons du groupe k.

La somme dans l'expression (6) est une somme d'une série géométrique. Après calcul, on obtient :

$$S_k = \frac{e^{\alpha_k} - e^{-(N-1)\alpha_k}}{e^{\alpha_k} - 1} \qquad (7)$$

L'introduction de (5) et (7) dans (6) donne :

$$\beta_{k,0}=n_k=\beta_k S_k \qquad (8)$$

Les valeurs de $\beta_{k,0}$ doivent être normalisées, pour que leur somme soit égale à 1 :

$$\sum_{k=1}^{6} \beta_{k,0} = 1 \qquad (9)$$

Pour le calcul de la décroissance des neutrons retardés, en tenant compte des conditions d'irradiation, il convient de remplacer, dans la formule

$$n(t) = \sum_{k=1}^{6} \beta_k e^{-\lambda_k t},$$

indiquée précédemment, la valeur $\beta_k$ par la valeur $\beta_k S_k$. Un exemple des valeurs corrigées, pour l'uranium 238 est donné dans le tableau 2. Les conditions expérimentales, utilisées dans le calcul des corrections, sont les suivantes :

- durée d'une macroimpulsion dt=2,5 µs,
- fréquence de répétition $f_r$=100 Hz,
- irradiation par une série de N=1500 macro-impulsions (temps d'irradiation de 15 s).

TABLEAU 2

| GROUPE | $T_{1/2}$ | λ | β | S | βS |
|---|---|---|---|---|---|
| | s | $s^{-1}$ | | | |
| 1 | 52,38 | 0,0132 | 0,013 | $5{,}238.10^3$ | 0,1279 |
| 2 | 21,58 | 0,0321 | 0,137 | $2{,}158.10^3$ | 0,5553 |
| 3 | 5,00 | 0,1386 | 0,162 | $5{,}005.10^3$ | 0,1523 |
| 4 | 1,93 | 0,33591 | 0,388 | $1{,}935.10^2$ | 0,1410 |
| 5 | 0,493 | 1,4060 | 0,225 | $4{,}980.10^1$ | 0,0210 |
| 6 | 0,172 | 4,0299 | 0,075 | $1.770.10^1$ | 0,0025 |

Lorsque la décroissance temporelle des neutrons retardés de fission de la matière fissile est établie, elle est comparée à la décroissance caractéristique des neutrons $n_u(t)$ et $n_p(t)$ de l'uranium et du plutonium purs. La décroissance caractéristique des neutrons de l'uranium et du plutonium purs peut être déterminée expérimentalement, soit calculée directement, par exemple avec les données du tableau 1.

Selon un aspect particulier de l'invention, on peut déterminer des coefficients a et b tels que : $n_e(t)=an_u(t)+bn_p(t)$, les coefficients a et b indiquant la proportion relative de l'uranium et du plutonium dans le corps radioactif.

Les coefficients a et b peuvent être déterminés, par exemple, par une méthode dite des moindres carrés et exposée sommairement ci-dessous.

La décroissance du nombre de neutrons retardés, émis par l'uranium, corrigée en fonction des conditions expérimentales, est donnée par la formule suivante déjà explicitée :

$$n_u(t) = \sum_k \beta_u S_{u,k} e^{-\lambda_k t} \qquad (1)$$

Le nombre de neutrons émis par le plutonium est donné par la formule similaire :

$$n_p(t) = \sum_k \beta_p S_{p,k} e^{-\lambda_k t}$$

Dans ces formules les indices u et p des paramètres se réfèrent respectivement à l'uranium et au plutonium.

Le nombre total de neutrons émis par le mélange est donné par la formule

$$n(t)=an_u+bn_p \qquad (2)$$

Lors de mesure, la largeur de l'intervalle de comptage est Δt et le nombre d'intervalles est égal à m. Le temps total de comptage est donc égal à :

$$t_m=m\Delta t \qquad (3)$$

Le nombre de coups accumulés dans un intervalle i est :

$$c_i = \sum_l a_l \sum_{k=1}^{6} \beta_{l,k} S_{l,k} \exp(-\lambda_k t_i)\left[1 - \exp(-\lambda_k \Delta t)\right] \qquad (4)$$

$l=u,p$ ; $a_u=a$, $a_p=b$.

Le nombre de neutrons comptés dans un intervalle de temps i, lors du comptage multiéchelle est désigné par $Ce_i$.

On recherche les valeurs de a et b, qui remplissent la condition :

$$Ce_i=c_i \qquad (5a),$$

où $c_i$ est défini par la formule (4).

Cette équation, en forme matricielle s'écrit de façon générale sous forme :

$$MX=Y \qquad (5b)$$

où M, X et Y sont les matrices définies de manière suivante :

$$M_{i,1} = \sum_{k=1}^{6} \beta u \qquad (6a),$$

$$M_{i,2} = \sum_{k=1}^{6} \beta p \qquad (6b)$$

$$X = \begin{pmatrix} a \\ b \end{pmatrix} \qquad (6c),$$

$$Y_i=Ce_i \qquad (6d)$$

Les valeurs de $M_{i,1}$, $M_{i,2}$ et $Y_i$ sont normalisées de manière suivante :

$$\sum_{i=1}^{m} M_{i,1} = 1 \qquad (7a)$$

$$\sum_{i=1}^{m} M_{i,2} = 1 \qquad (7b)$$

$$\sum_{i=1}^{m} Y_i = 1 \qquad (7c)$$

La solution de l'équation (5b) est :

$$X=(M^TM)^{-1}(M^TY) \qquad (8)$$

A partir des paramètres a et b déterminés par la formule (8), on calcule la teneur en uranium $\tau_u$ :

$$\tau_u = \frac{a}{a + b} \qquad (9a)$$

et celle en plutonium $\tau_p$ :

$$\tau_p = \frac{b}{a + b} \qquad (9b)$$

L'invention concerne également un dispositif pour la mesure d'une proportion relative d'uranium et de plutonium dans un colis radioactif.

Le dispositif comporte :

- une source de photons d'activation pour irradier un colis radioactif,
- au moins un détecteur de neutrons, placé au voisinage d'une zone de réception du colis, apte à délivrer des signaux de comptage de neutrons émis par le colis,
- des moyens d'acquisition des signaux de comptage, aptes à établir une décroissance dans le temps du nombre de neutrons émis, caractéristique du colis radioactif,
- des moyens de calcul pour comparer la décroissance caractéristique du colis radioactif aux décroissances caractéristiques respectives de l'uranium et du plutonium purs et pour établir une proportion relative d'uranium et de plutonium dans le colis.

Les moyens d'acquisition et les moyens de calcul peuvent être réalisés par exemple sous la forme d'une carte électronique d'acquisition, reliée à un micro-ordinateur, avec un programme de calcul approprié.

Selon une réalisation particulière du dispositif, la source de photons peut comporter un accélérateur d'électrons muni d'une cible de rayonnement de freinage (Bremsstrahlung).

Selon une mise en oeuvre préférée, le dispositif peut comporter de 4 à 7 détecteurs de neutrons disposés autour de la zone de réception du colis de déchets radioactifs.

La disposition des détecteurs ainsi que d'autres caractéristiques et avantages de l'invention ressortiront mieux de la description qui va suivre, en référence aux figures des dessins annexés. Cette description est donnée à titre d'exemple purement illustratif et non limitatif.

## Brève description des figures

- La figure 1 est une représentation schématique simplifiée d'un dispositif conforme à l'invention.
- La figure 2 est une coupe horizontale d'une installation particulière du dispositif de l'invention.
- La figure 3 est une coupe transversale de l'installation de la figure 2.
- La figure 4 représente des courbes de décroissance théoriques et expérimentales pour l'uranium et le plutonium purs.
- La figure 5 représente les courbes de décroissance théoriques pour l'uranium et le plutonium ainsi qu'une courbe de décroissance expérimentale pour un échantillon contenant à la fois de l'uranium et du plutonium.

## Description de modes de mise en oeuvre de l'invention

La figure 1 montre un dispositif expérimental conforme à l'invention.

Le dispositif comporte une source de photons gamma d'activation indiquée avec la référence 10. La source de photons gamma comporte un accélérateur d'électrons 12 devant lequel est disposé d'une cible dite de "Bremsstrahlung" 14. La cible est généralement constituée d'un métal lourd. Il s'agit par exemple d'une plaque de tantale d'une épaisseur de 1,95 mm ou une plaque de tungstène d'une épaisseur de 1,7 mm.

La cible convertit l'énergie des électrons de 15 à 16 MeV par exemple, provenant de l'accélérateur 12 en des photons gamma.

Les photons gamma, représentés par des flèches, sont dirigés vers un échantillon 16 ou un colis de matériau radioactif à analyser. L'échantillon contient des actinides qui, sous l'effet des photons, subissent une fission, et émettent des neutrons.

La référence 18 indique un bloc détecteur de neutrons placé au voisinage de l'échantillon 16 pour détecter les neutrons retardés émis par l'échantillon.

Le bloc détecteur 18 comporte plusieurs détecteurs, remplis d'hélium 3 et entourés par un modérateur en

polyéthylène, par exemple. L'ensemble des détecteurs et du modérateur est recouvert d'une couche de cadmium ou d'un autre absorbant de neutrons thermiques. Cette couche sert essentiellement à diminuer les bruits de fond de mesure dus à des neutrons générés, par exemple, dans les murs avoisinants du local d'installation du dispositif (non représenté).

Les détecteurs du bloc 18 sont polarisés à partir d'une source de haute tension 20.

Le bloc détecteur 18 est relié à une chaîne d'acquisition 22 comprenant pour l'essentiel un circuit convertisseur courant-tension 24, un circuit de mise en forme 26 et un discriminateur 28. Ainsi, les impulsions émanant du bloc détecteur sont amplifiées et mises en forme avant d'être dirigés vers une carte d'acquisition et de comptage 30 reliée à un analyseur 32.

La carte de comptage 30 et l'analyseur 32 font partie, par exemple, d'un micro-ordinateur 34.

Une flèche 36 indique une liaison entre l'accélérateur d'électrons 12 et la carte de comptage 30 afin de transmettre un signal de départ indiquant le début de l'irradiation de l'échantillon 18.

La figure 2 montre en coupe horizontale une installation pour la différenciation de l'uranium et du plutonium dans un colis de déchets radioactifs.

Le colis de déchets 116 est disposé dans une enceinte 150. Le colis est plus précisément placé au centre d'une zone de réception 152 entourée, par exemple, par sept blocs détecteurs de neutrons 118 uniformément répartis autour de cette zone.

L'enceinte 150 présente une ouverture à travers laquelle le colis peut être irradié par une source de photons gamma 110. La source comprend un accélérateur d'électrons 112 et une cible de Bremsstrahlung 114 du type déjà décrit en référence à la figure 1.

La chaîne d'acquisition et les moyens de traitement des signaux, de même que les sources d'alimentation des blocs détecteurs 118 ne sont pas représentés sur la figure 2 pour des raisons de simplification.

On peut noter que l'enceinte 150 a pour fonction de protéger le colis et les détecteurs de l'influence de neutrons générés à l'extérieur de la zone de réception 152, par exemple dans les murs du local d'installation et d'éventuels objets avoisinants.

L'enceinte 150 comporte un matériau modérateur. Selon une réalisation particulière, tout ou partie des détecteurs de neutrons peuvent être inclus dans les parois de l'enceinte 150.

La figure 3, qui est une coupe transversale de l'installation, montre que le colis de déchets 116 peut être disposé sur une table tournante 156, au centre de la zone de réception 152.

La table tournante 156, mise en rotation pendant l'irradiation et pendant la mesure, permet d'obtenir une irradiation et des mesures homogènes du colis de déchets radioactifs.

La figure 4 montre des courbes représentant les décroissances caractéristiques de l'uranium et du plutonium purs. Sur la figure 4, le nombre de neutrons compté est reporté en ordonnée et en échelle logarithmique, tandis que le temps, mesuré en secondes, est indiqué en abscisse.

Les courbes 401 et 402 sont des courbes théoriques de décroissance, respectivement de l'uranium et du plutonium. Les courbes 403 et 404 sont des courbes expérimentales de décroissance respectivement de l'uranium et du plutonium, établies dans un dispositif expérimental tel que décrit précédemment.

Pour effectuer les mesures des courbes 403 et 404, des échantillons d'uranium et de plutonium sont irradiés avec un train de macro-impulsions de photons gamma d'une durée de 2,5 $\mu$s chacune et à une fréquence de 100 Hz. Le nombre de macro-impulsions est de 1500, ce qui correspond à une durée totale d'irradiation de 15 secondes.

Les comptages des neutrons pour les courbes de la figure 4 sont intégrés sur des intervalles de 6 secondes.

On rappelle que les paramètres définis dans les deux paragraphes précédents concernent une réalisation particulière et n'ont aucun caractère limitatif.

Sur la figure 5, la courbe 500 indique la décroissance caractéristique d'un échantillon formé d'un mélange de 87% d'uranium et de 13% de plutonium.

A titre indicatif, les courbes théoriques de décroissance de l'uranium et du plutonium sont également reportées. Ces courbes sont indiquées avec les références 501 et 502.

La comparaison de la décroissance caractéristique du mélange à celles de l'uranium et du plutonium purs permet d'établir, conformément à l'invention, les proportions suivantes :

- teneur en uranium a=92%,
- teneur en plutonium b=8%.

On peut noter qu'après environ 50 secondes, les points expérimentaux sont voisins du niveau de bruit de fond. Ainsi, pour le calcul des teneurs en uranium et en plutonium seuls les 15 premiers intervalles sont retenus.

Il apparaît ainsi que, grâce au procédé de l'invention, la proportion d'uranium et de plutonium d'un colis de déchets radioactifs peut être connue avec une précision de l'ordre de $\pm$10%.

Des précisions meilleures peuvent encore être obtenues en prenant des mesures particulières pour diminuer

le bruit de fond des mesures.

Par exemple, l'objet à examiner et le colis peuvent être placés dans une enceinte dont les parois comportent au moins deux couches de modérateur séparées par une couche de cadmium. Ceci permet de réduire davantage l'influence des neutrons générés hors du colis.

## Revendications

1. Procédé de mesure d'une proportion relative d'uranium et de plutonium dans un corps (16, 116) comportant les étapes suivantes :

   a) irradiation du corps avec des photons dont l'énergie est suffisante pour provoquer une photofission d'éléments actinides,
   b) comptage du nombre de neutrons retardés émis par unité de temps par les produits de fission induits dans ledit corps en réponse à l'irradiation,
   c) établissement d'une fonction de décroissance temporelle (500) du nombre de neutrons retardés $n_e(t)$ émis, caractéristique de la composition en actinides dudit corps,
   d) comparaison de la décroissance temporelle $n_e(t)$ caractéristique de la composition en actinides dudit corps (116) aux décroissances temporelles (501, 502) d'émission de neutrons retardés $n_u(t)$, $n_p(t)$ caractéristiques respectivement de l'uranium et du plutonium pour établir la proportion relative de ces éléments dans le corps.

2. Procédé selon la revendication 1, dans lequel lors de l'étape d), on détermine des coefficients a et b tels que : $n_e(t)=an_u(t)+bn_p(t)$, les coefficients a et b indiquant la proportion relative de l'uranium et du plutonium dans le corps.

3. Procédé selon la revendication 2, dans lequel on détermine les coefficients a et b par une méthode de calcul dite des moindres carrés.

4. Procédé selon la revendication 1, dans lequel on irradie le corps de façon continue.

5. Procédé selon la revendication 1, dans lequel on irradie le corps radioactif par un train d'impulsions de photons.

6. Procédé selon la revendication 1, dans lequel on répète plusieurs fois les étapes a) et b).

7. Dispositif pour la mesure d'une proportion relative d'uranium et de plutonium dans un colis (16, 116) radioactif, comportant :

   - une source de photons (10, 110) d'activation pour irradier un colis radioactif (16, 116),
   - au moins un détecteur de neutrons (18, 118) placé au voisinage d'une zone de réception (152) du colis (16, 116) apte à délivrer des signaux de comptage de neutrons émis par le colis,
   - des moyens (22, 30) d'acquisition des signaux de comptage, aptes à établir une décroissance dans le temps des neutrons émis, caractéristique du colis radioactif,
   - des moyens de calcul (32) pour comparer la décroissance caractéristique du colis radioactif aux décroissances caractéristiques respectives de l'uranium et du plutonium et pour établir une proportion relative d'uranium et de plutonium dans le colis.

8. Dispositif selon la revendication 7 dans lequel la source de photons d'activation (10, 110) comporte un accélérateur d'électrons (12, 112) muni d'une cible (14, 114) de rayonnement de freinage (Bremsstrahlung).

9. Dispositif selon la revendication 7, dans lequel un certain nombre de détecteurs (118), sont disposés autour de la zone de réception du colis.

10. Dispositif selon la revendication 7 comprenant une table tournante (156) apte à recevoir le colis radioactif (116), pour mettre en rotation le colis devant la source de photons (110) de(s) détecteur(s) de neutrons.

11. Dispositif selon la revendication 7 comprenant une enceinte modératrice (150) entourant la zone (152) de réception du colis et le(s) détecteur(s) de neutrons (118).

## Patentansprüche

1. Verfahren zur Bestimmung des relativen Mengenverhältnisses zwischen Uran und Plutonium in einem Körper (16, 116), das die folgenden Stufen umfasst:

   a) Bestrahlen des Körpers mit Photonen, deren Energie ausreicht, um eine Photospaltung von Actiniden-Elementen hervorzurufen,
   b) Auszählen der Anzahl der verzögerten Neutronen, die pro Zeiteinheit von den Spaltprodukten emittiert werden, die in dem Körper als Folge der Bestrahlung entstanden sind,
   c) Aufstellung einer Funktion der zeitlichen Abnahme (500) der Anzahl der emittierten verzögerten Neutronen $n_e(t)$, die charakteristisch ist für die Actiniden-Zusammensetzung des Körpers,
   d) Vergleich der zeitlichen Abnahme $n_e(t)$, die charakteristisch ist für die Actiniden-Zusammensetzung des Körpers (116), mit den zeitlichen Abnahmen (501, 502) der Emission von verzögerten Neutronen $n_u(t)$, $n_p(t)$, die jeweils charakteristisch sind für Uran und Plutonium, um das relative Mengenverhältnis dieser Elemente in dem Körper festzustellen.

2. Verfahren nach Anspruch 1, bei dem in der Stufe (d) die Koeffizienten a und b, die das relative Mengenverhältnis an Uran und Plutonium in dem Körper anzeigen,

$$n_e(t)=an_u(t)+bn_p(t)$$

   bestimmt werden.

3. Verfahren nach Anspruch 2, bei dem die Koeffizienten a und b nach der so genannten kleinsten Fehlerquadrat-Rechenmethode bestimmt werden.

4. Verfahren nach Anspruch 1, bei dem der Körper kontinuierlich bestrahlt wird.

5. Verfahren nach Anspruch 1, bei dem der radioaktive Körper mit einer Folge von Photonenimpulsen bestrahlt wird.

6. Verfahren nach Anspruch 1, bei dem die Stufen (a) und (b) mehrmals wiederholt werden.

7. Vorrichtung zur Bestimmung des relativen Mengenanteils an Uran und Plutonium in einem radioaktiven Paket (16, 116), die umfasst:

   - eine aktivierende Photonen-Quelle (10, 110) zum Bestrahlen eines radioaktiven Pakets (16, 116),
   - mindestens einen Neutronendetektor (18, 118), der in der Umgebung einer Empfangszone (152) des Pakets (16, 116) angeordnet ist, der Signale zum Auszählen der von dem Paket emittierten Neutronen abgeben kann,
   - Einrichtungen (22, 30) zur Aufnahme der Auszählsignale, die die Abnahme der emittierten Neutronen mit der Zeit bestimmen kann, die charakteristisch für das radioaktive Paket ist,
   - Recheneinrichtungen (32), um die charakteristische Abnahme, die charakteristisch ist für das radioaktive Paket, mit den Abnahmen, die jeweils charakteristisch sind für Uran und Plutonium, zu vergleichen und um den relativen Mengenanteil (Mengenverhältnis) an Uran und Plutonium in dem Paket festzustellen.

8. Vorrichtung nach Anspruch 7, in der die Aktivierungsphotonenquelle (10, 110) einen Elektronenbeschleuniger (12, 112) umfasst, der ein Target (14, 114) für die Bremsstrahlung aufweist.

9. Vorrichtung nach Anspruch 7, in der eine bestimmte Anzahl von Detektoren (118) um die Empfangszone des Pakets herum angeordnet ist.

10. Vorrichtung nach Anspruch 7, die einen Drehteller (156) für die Aufnahme des radioaktiven Pakets (116) umfasst, um das Paket vor der Photonenquelle (110) des (der) Neutronendetektors (-detektoren) in Rotation zu versetzen.

11. Vorrichtung nach Anspruch 7, die einen Moderator-Behälter (150) aufweist, der die Zone (152) für die Aufnahme des Pakets und den (die) Neutronendetektor (-detektoren) (118) umgibt.

## Claims

1. A method of measuring relative proportions of uranium and plutonium in a body (16, 116), including the following steps:

   a) irradiating the body with photons whose energy is sufficient to cause photofission of actinide elements,
   b) counting the number of delayed neutrons emitted per unit time by fission products induced in the said body in response to the irradiation,
   c) establishing a time decay function (500) of the number of neutrons $n_e(t)$ emitted, characteristic of the actinide composition of the said body,
   d) comparing the time decay $n_e(t)$ characteristic of the actinide composition of the said body (116), with time decays (501, 502) of emission of delayed neutrons $n_u(t)$, $n_p(t)$ characteristic respectively of uranium and plutonium, in order to establish the relative proportions of these elements in the body.

2. A method according to Claim 1, in which, during step d), coefficients a and b are determined such that: $n_o(t)=an_u(t)+bn_p(t)$, the coefficients a and b indicating the relative proportions of uranium and plutonium in the body.

3. A method according to Claim 2, in which the coefficients a and b are determined by a so-called least squares calculation method.

4. A method according to Claim 1, in which the body is continuously irradiated.

5. A method according to Claim 1, in which the radioactive body is irradiated by means of a train of photon pulses.

6. A method according to Claim 1, in which steps a) and b) are repeated several times.

7. A device for measuring relative proportions of uranium and plutonium in a radioactive package (16, 116), having:

   - a source of activation photons (10, 110) for irradiating a radioactive package (16, 116),
   - at least one neutron detector (18, 118) placed in the vicinity of an area (152) for receiving the package (16, 116) able to deliver signals for counting neutrons emitted by the package,
   - means (22, 30) of acquiring counting signals, able to establish a decrease over time in the neutrons emitted, characteristic of the radioactive package,
   - calculation means (32) for comparing the characteristic decay of the radioactive package with the respective characteristic decays of uranium and plutonium and for establishing relative proportions of uranium and plutonium in the package.

8. A device according to Claim 7, in which the source of activation photons (10, 110) has an electron accelerator (12, 112) provided with a Bremsstrahlung target (14, 114).

9. A device according to Claim 7, in which a certain number of detectors (118) are disposed around the area for receiving the package.

10. A device according to Claim 7, comprising a rotary table (156) able to receive the radioactive package (116), to put the package in rotation in front of the photon source (110) of the neutron detector or detectors.

11. A device according to Claim 7, comprising a moderating enclosure (150) surrounding the area (152) receiving the package and the neutron detector or detectors (118).

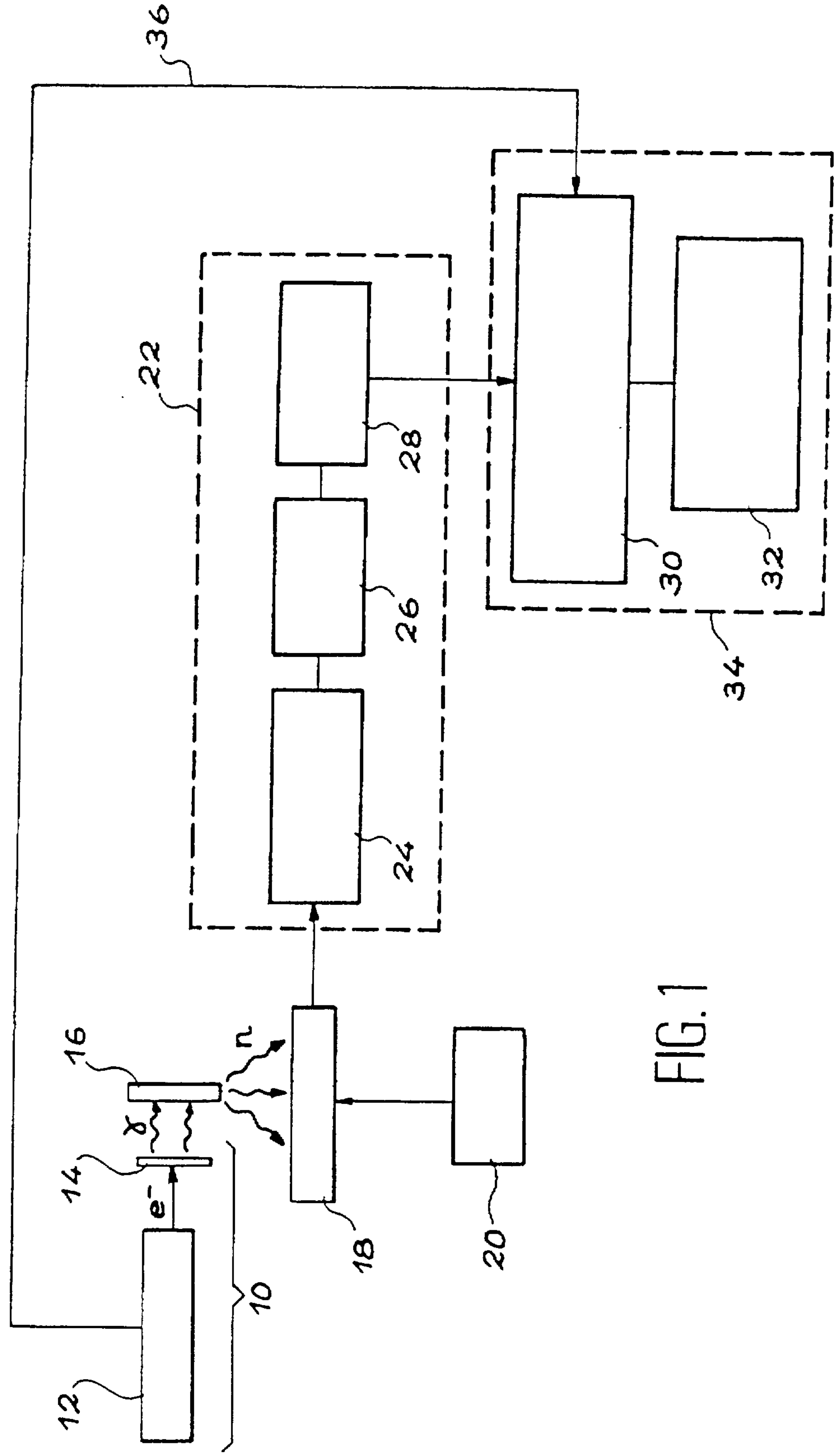


FIG. 1

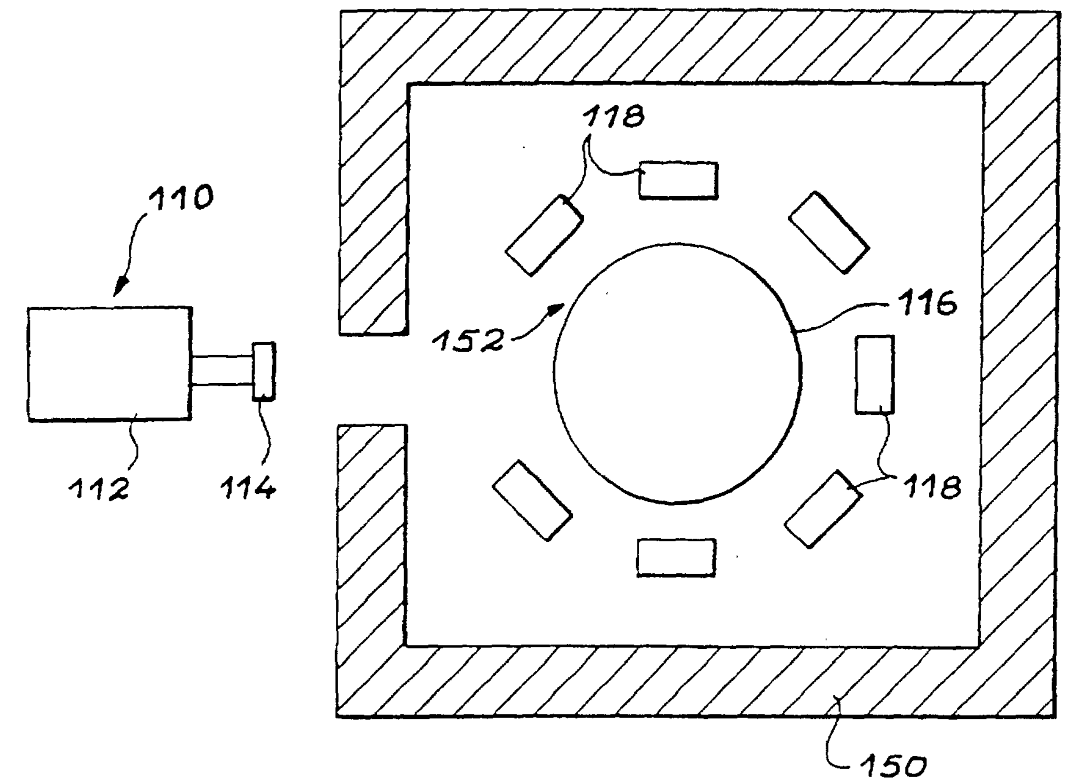


FIG. 2

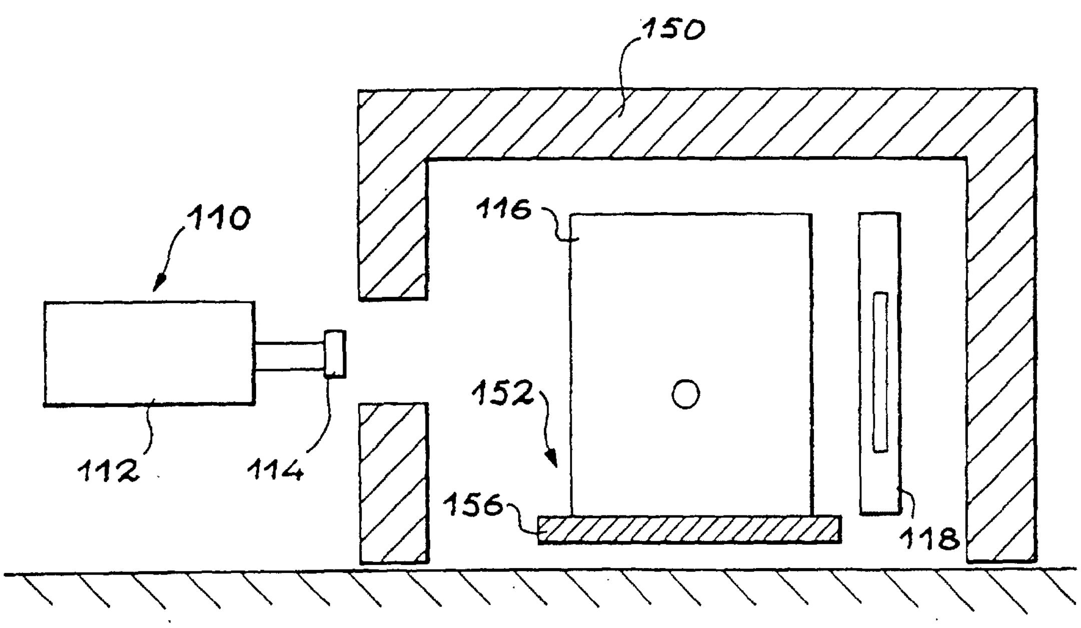


FIG. 3

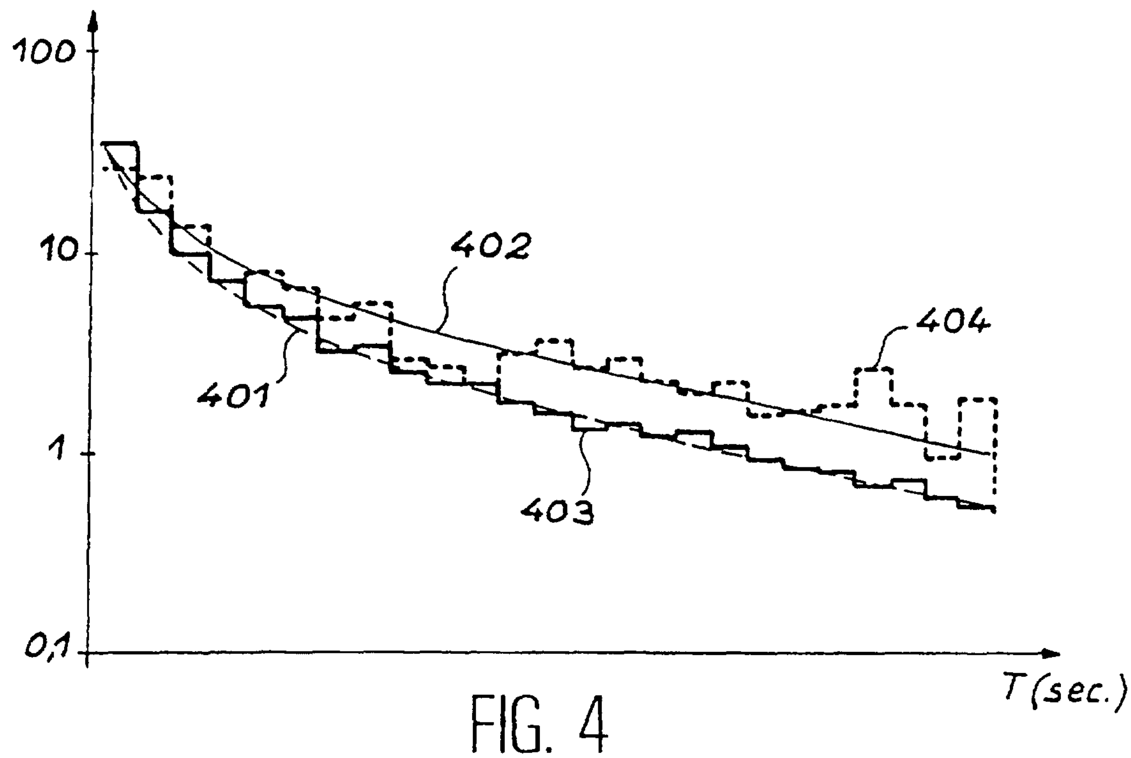


FIG. 4

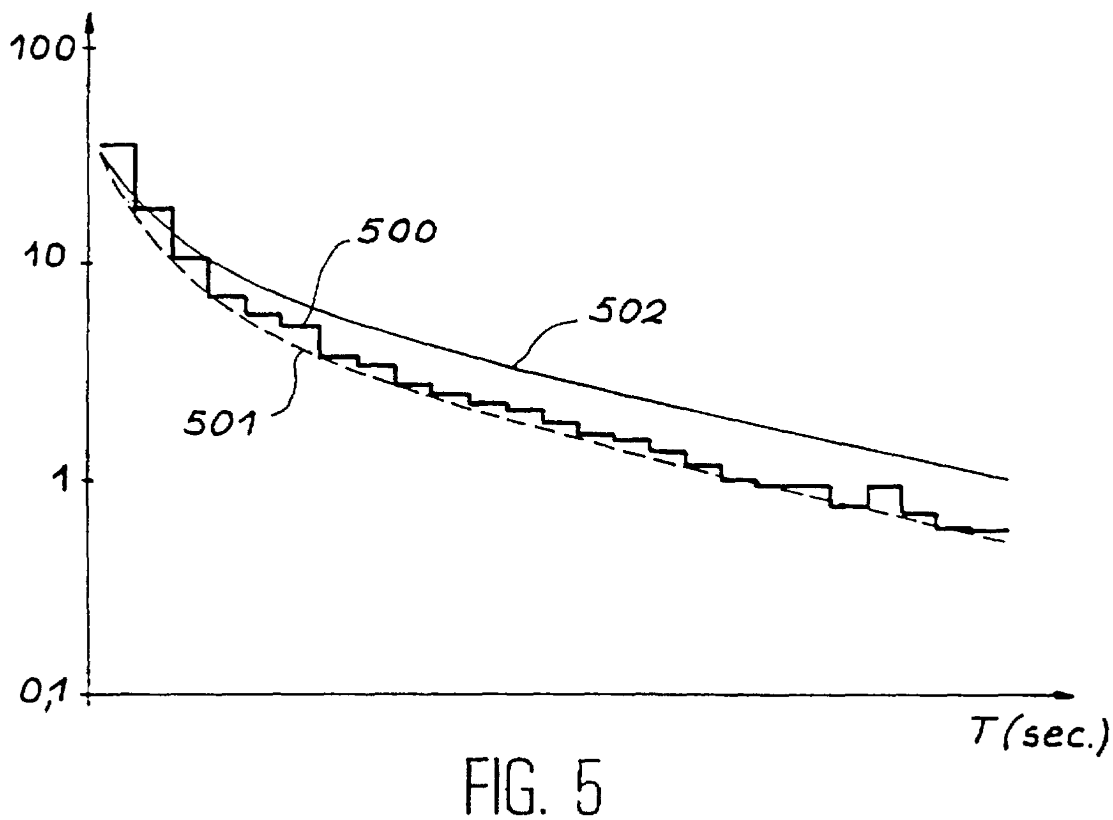


FIG. 5